# EUROPEAN PATENT APPLICATION

(11) **EP 4 819 527 A1**
(43) Date of publication of application: **07.10.2026**
(21) Application number: 24911116.2
(22) Date of filing: 24.12.2024
(51) Int. Cl.: H04L 5/00

(54) **METHOD AND APPARATUS FOR FEEDING BACK INFORMATION**

(30) Priority: 25.12.2023 CN 202311809115
(71) Applicant: Huawei Technologies Co., Ltd., Shenzhen, Guangdong 518129 (CN)
(72) Inventor: MA, He, Shenzhen, Guangdong 518129 (CN); MA, Mengyao, Shenzhen, Guangdong 518129 (CN); LI, Jiahui, Shenzhen, Guangdong 518129 (CN); XIE, Junwen, Shenzhen, Guangdong 518129 (CN); WANG, Ruixin, Shenzhen, Guangdong 518129 (CN)
(74) Representative: Maiwald GmbH
(86) International application number: PCT/CN2024/141844
(87) International publication number: WO 2025/140191

(57) **Abstract**

An information feedback method and an apparatus are provided. The method includes: A terminal performs channel estimation on a downlink reference signal, to obtain downlink channel information. The terminal obtains first multipath information from an electromagnetic map. The terminal determines, based on the downlink channel information and the first multipath information, a first mode in which the terminal feeds back the downlink channel information to an access network device. The terminal feeds back the first information to the access network device based on the first mode. The access network device may recover the downlink channel information between the access network device and the terminal based on the first information, thereby improving quality of communication between the terminal and the access network device.

## Description

### CROSS-REFERENCE TO RELATED APPLICATIONS

This application claims priority to Chinese Patent Application No. 202311809115.0, filed with the China National Intellectual Property Administration on December 25, 2023 and entitled "INFORMATION FEEDBACK METHOD AND APPARATUS", which is incorporated herein by reference in its entirety.

### TECHNICAL FIELD

Embodiments of this application relate to the field of communication technologies, and in particular, to an information feedback method and an apparatus.

### BACKGROUND

With continuous development of wireless communication, application scenarios of wireless communication have become increasingly diverse, for example, smartphones, vehicle-to-everything, and internet of things. As a quantity of terminals increases, a requirement for communication quality increases accordingly. It is expected that next generation wireless communication systems will generate a large amount of air interface data, such as channel information. How a terminal efficiently feeds back information to an access network device is a research direction.

### SUMMARY

Embodiments of this application provide an information feedback method and an apparatus, to reduce transmission overheads caused by air interface data and improve information feedback efficiency.

According to a first aspect, an information feedback method is provided. The method is applied to a first communication apparatus and includes: obtaining a downlink reference signal, where the downlink reference signal is used to determine downlink channel information; obtaining an electromagnetic map, where the electromagnetic map includes first multipath information; and feeding back first information to a second communication apparatus, where the first information is associated with a first mode in which the first communication apparatus feeds back the downlink channel information to the second communication apparatus, and the first mode is determined based on the downlink channel information and the first multipath information.

According to the foregoing design, the first communication apparatus integrates the electromagnetic map into feedback of the downlink channel information. The first communication apparatus may determine the first mode for information feedback based on a similarity between the first multipath information of the electromagnetic map and the downlink channel information, and feed back the first information to the second communication apparatus based on the first mode. This improves compression efficiency while maintaining good communication performance.

In a possible design, the first information includes second multipath information and/or location information, the second multipath information is obtained by calibrating the downlink channel information based on the first multipath information, and the location information includes location information of the first communication apparatus or location information of a reference point corresponding to the first multipath information.

According to the foregoing design, the downlink channel information is corrected based on the electromagnetic map, so that prior knowledge of a physical channel can be effectively used, to help optimize channel data feedback, and improve performance.

In a possible design, the second multipath information includes an angle of arrival and an angle of departure, and the angle of arrival and the angle of departure are determined based on the downlink channel information. Optionally, the second multipath information further includes a power and/or a delay, the power is determined based on the first multipath information, and the delay is determined based on the first multipath information or the downlink channel information.

In a possible design, the first mode includes feeding back the second multipath information, or the first mode includes feeding back the location information.

In a possible design, the first information includes channel state information CSI-related information. The first mode includes feeding back the CSI-related information.

In a possible design, the method further includes: obtaining indication information of a threshold from the second communication apparatus.

In a possible design, that the first mode is determined based on the downlink channel information and the first multipath information includes: The first mode is determined based on the downlink channel information, the first multipath information, and the second multipath information.

In a possible design, that the first mode is determined based on the downlink channel information, the first multipath information, and the second multipath information includes: The first mode is determined based on similarities between the first channel and the first reconstructed channel, and between the first channel and the second reconstructed channel.

The first reconstructed channel is determined based on the first multipath information, the second reconstructed channel is determined based on the second multipath information, and the first channel is a channel corresponding to the downlink channel information.

In a possible design, that the first mode is determined based on the similarities between the first channel and the first reconstructed channel, and between the first channel and the second reconstructed channel includes: The first mode is determined based on a threshold and the similarities between the first channel and the first reconstructed channel, and between the first channel and the second reconstructed channel.

In a possible design, that the first mode is determined based on the similarities between the first channel and the first reconstructed channel, and between the first channel and the second reconstructed channel includes: The first mode is determined based on similarities between the first channel and the first reconstructed channel, between the first channel and the second reconstructed channel, and between the first channel and a third reconstructed channel, where the third reconstructed channel is a reconstructed channel corresponding to the CSI-related information.

In a possible design, the reference point corresponding to the first multipath information matches the downlink channel information, or the reference point corresponding to the first multipath information matches the location information of the first communication apparatus.

In a possible design, the downlink channel information includes third multipath information, and the third multipath information is determined based on a channel estimation result of the downlink reference signal.

According to a second aspect, an apparatus corresponding to the first aspect is provided. For beneficial effects, refer to the descriptions of the first aspect. An information feedback method is provided. The method is applied to a second communication apparatus, and includes: sending a downlink reference signal to a first communication apparatus, where the downlink reference signal is used to determine downlink channel information; and sending an electromagnetic map to the first communication apparatus, where the electromagnetic map includes first multipath information; and receiving first information from the first communication apparatus, where the first information is associated with a first mode in which the first communication apparatus feeds back the downlink channel information to the second communication apparatus, and the first mode is determined based on the downlink channel information and the first multipath information.

In a possible design, the first information includes second multipath information and/or location information, the second multipath information is obtained by calibrating the downlink channel information based on the first multipath information, and the location information includes location information of the first communication apparatus or location information of a reference point corresponding to the first multipath information.

In a possible design, the second multipath information includes an angle of arrival and an angle of departure, and the angle of arrival and the angle of departure are determined based on the downlink channel information.

In a possible design, the second multipath information further includes a power and/or a delay, the power is determined based on the first multipath information, and the delay is determined based on the first multipath information or the downlink channel information.

In a possible design, the first mode includes feeding back the second multipath information, or the first mode includes feeding back the location information.

In a possible design, the first information includes channel state information CSI-related information, and the first mode includes feeding back the CSI-related information.

In a possible design, the method further includes: sending indication information of a threshold to the first communication apparatus.

In a possible design, that the first mode is determined based on the downlink channel information and the first multipath information includes: The first mode is determined based on the downlink channel information, the first multipath information, and the second multipath information.

In a possible design, that the first mode is determined based on the downlink channel information, the first multipath information, and the second multipath information includes: The first mode is determined based on similarities between the first channel and the first reconstructed channel, and between the first channel and the second reconstructed channel.

The first reconstructed channel is determined based on the first multipath information, the second reconstructed channel is determined based on the second multipath information, and the first channel is a channel corresponding to the downlink channel information.

In a possible design, that the first mode is determined based on the similarities between the first channel and the first reconstructed channel, and between the first channel and the second reconstructed channel includes: The first mode is determined based on a threshold and the similarities between the first channel and the first reconstructed channel, and between the first channel and the second reconstructed channel.

In a possible design, that the first mode is determined based on the similarities between the first channel and the first reconstructed channel, and between the first channel and the second reconstructed channel includes: The first mode is determined based on similarities between the first channel and the first reconstructed channel, between the first channel and the second reconstructed channel, and between the first channel and a third reconstructed channel, where the third reconstructed channel is a reconstructed channel corresponding to the CSI-related information.

In a possible design, the reference point corresponding to the first multipath information matches the downlink channel information, or the reference point corresponding to the first multipath information matches the location information of the first communication apparatus.

In a possible design, the downlink channel information includes third multipath information, and the third multipath information is determined based on a channel estimation result of the downlink reference signal.

According to a third aspect, an apparatus is provided. The apparatus can implement the method in the first aspect. For example, the apparatus includes a corresponding means (means) for performing the first aspect. The apparatus may be implemented by hardware, implemented by software, or implemented by hardware executing corresponding software.

In a possible design, the apparatus includes a unit for implementing the first aspect.

In a possible design, the apparatus includes a processor, and the processor is configured to perform the method in the first aspect.

In a possible design, the apparatus includes a processing circuit and an interface circuit. The interface circuit is configured to receive a signal from an apparatus other than the apparatus and transmit the signal to the processing circuit, or send a signal from the processing circuit to an apparatus other than the apparatus. The processing circuit is configured to implement the method in the first aspect by using a logic circuit or by executing code instructions. Optionally, the processing circuit may be a processor, and the interface circuit may be a transceiver or an input/output interface.

In a possible design, the apparatus includes a processor and a memory. The processor is configured to execute a computer program or instructions stored in the memory. The memory is configured to store the computer program or the instructions. When the computer program or the instructions are run, the method in the first aspect is performed.

Optionally, the apparatus may be a first apparatus, or may be a module or a unit (for example, a chip, a chip system, or a circuit) that is in one-to-one correspondence with the method/operation/step/action described in the first aspect in the first apparatus, or may be used in cooperation with the first apparatus.

According to a fourth aspect, an apparatus is provided. The apparatus can implement the method in the second aspect. For example, the apparatus includes a corresponding means (means) for performing the second aspect. The apparatus may be implemented by hardware, implemented by software, or implemented by hardware executing corresponding software.

In a possible design, the apparatus includes a unit for implementing the second aspect.

In a possible design, the apparatus includes a processor, and the processor is configured to perform the method in the second aspect.

In a possible design, the apparatus includes a processing circuit and an interface circuit. The interface circuit is configured to receive a signal from an apparatus other than the apparatus and transmit the signal to the processing circuit, or send a signal from the processing circuit to an apparatus other than the apparatus. The processing circuit is configured to implement the method in the second aspect by using a logic circuit or by executing code instructions.

In a possible design, the apparatus includes a processor and a memory. The processor is configured to execute a computer program or instructions stored in the memory. The memory is configured to store the computer program or the instructions. When the computer program or the instructions are run, the method in the second aspect is performed.

Optionally, the apparatus may be a second apparatus, or may be a module or a unit (for example, a chip, a chip system, or a circuit) that is in one-to-one correspondence with the method/operation/step/action described in the second aspect in the second apparatus, or may be used in cooperation with the second apparatus.

According to a fifth aspect, a computer-readable storage medium is provided. The computer-readable storage medium stores a computer program or instructions. When the computer program or the instructions are run on a computer, the computer is caused to implement the method in the first aspect or the second aspect.

According to a sixth aspect, a computer program product is provided. The computer program product includes a computer program or instructions used to perform the method in the first aspect, or the computer program product includes a computer program or instructions used to perform the method in the second aspect.

According to a seventh aspect, a chip is provided. The chip includes a processor. The processor is coupled to a memory, and is configured to execute a computer program or instructions stored in the memory, to cause the chip to implement the method in the first aspect or the second aspect.

According to an eighth aspect, a communication system is provided. The communication system includes a first communication apparatus and a second communication apparatus. The first communication apparatus is configured to implement the method in the first aspect, and the second communication apparatus is configured to implement the method in the second aspect.

### BRIEF DESCRIPTION OF DRAWINGS

FIG. 1 is a diagram of an architecture of a communication system according to an embodiment of this application;
FIG. 2 is a diagram of an electromagnetic map according to an embodiment of this application;
FIG. 3 is a schematic flowchart of an information feedback method according to an embodiment of this application;
FIG. 4 is a diagram of multipath information calibration according to an embodiment of this application;
FIG. 5 is a diagram of multipath information matching according to an embodiment of this application;
FIG. 6 is another diagram of multipath information calibration according to an embodiment of this application;
FIG. 7 is a diagram of modules of selecting a feedback mode according to an embodiment of this application;
FIG. 8 is a schematic flowchart of selecting a feedback mode according to an embodiment of this application;
FIG. 9 is a diagram of a structure of an apparatus according to an embodiment of this application; and
FIG. 10 is a diagram of another structure of an apparatus according to an embodiment of this application.

### DESCRIPTION OF EMBODIMENTS

To make the objectives, technical solutions, and advantages of this application clearer, the following further describes this application in detail with reference to the accompanying drawings. Specific operation methods, function descriptions, and the like in method embodiments may also be applied to apparatus embodiments or system embodiments.

Various numbers and terms such as "first" and "second" in embodiments of this application are merely used for differentiation for ease of description, but are not intended to limit the scope of embodiments of this application. Sequence numbers of the foregoing processes do not mean an execution sequence, and the execution sequence of the processes should be determined based on functions and internal logic of the processes.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. "Including at least one of A, B, or C" may indicate: including A; including B; including C; including A and B; including A and C; including B and C; and including A, B, and C.

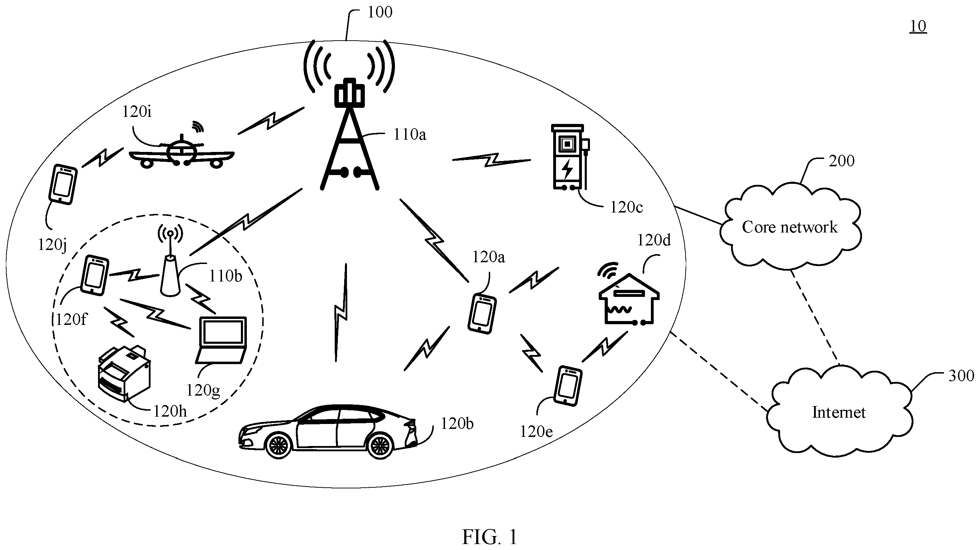

FIG. 1 is a diagram of a possible and non-limiting system. As shown in FIG. 1, the communication system 10 includes a radio access network (radio access network, RAN) 100 and a core network (core network, CN) 200. Optionally, the internet 300 is further included.

### 1. RAN

The RAN 100 includes at least one RAN node (for example, 110a and 110b in FIG. 1, collectively referred to as 110) and at least one terminal (for example, 120a to 120j in FIG. 1, collectively referred to as 120). The RAN 100 may also include another RAN node, for example, a wireless relay device and/or a wireless backhaul device (not shown in FIG. 1).

The terminal 120 may be connected to the RAN node 110 in a wireless manner. The RAN node 110 is connected to the core network 200 in a wireless or wired manner. A core network element in the core network 200 and the RAN node 110 in the RAN 100 may be different physical devices, or may be a same physical device that integrates a logical function of the core network element and a logical function of the radio access network.

A plurality of RAN nodes 110 in the communication system 10 may be nodes of a same type, or may be nodes of different types. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100 via the network element 120i, the network element 120i is a base station. However, for the base station 110a, the network element 120i is a terminal.

The RAN 100 may be a cellular system related to a 3rd generation partnership project (3rd generation partnership project, 3GPP), for example, a 4th generation (4th generation, 4G) mobile communication system, a 5th generation (5th generation, 5G) mobile communication system, or a future-oriented evolved system, for example, a 6th generation (6th generation, 6G) mobile communication system. The RAN 100 may alternatively be an open access network (open RAN, O-RAN, or ORAN), a cloud radio access network (cloud radio access network, CRAN), or a wireless fidelity (wireless fidelity, Wi-Fi) system. Alternatively, the RAN 100 may be a communication system that integrates the foregoing two or more systems.

### 1.1. RAN node

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The RAN node may be a macro base station (for example, 110a in FIG. 1), a micro base station or an indoor base station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU). All or some of functions of the RAN node in embodiments of this application may alternatively be implemented by using a software function running on hardware, or may be implemented by using a virtualization function instantiated on a platform (for example, a cloud platform). Alternatively, the RAN node in embodiments of this application may be a logical node, a logical module, or software that can implement all or some of functions of the RAN node.

In another possible scenario, a plurality of RAN nodes collaborate to assist the terminal in implementing radio access, and different RAN nodes respectively implement some functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The RAN node may also be sometimes referred to as an access network device, a RAN entity, an access node, or the like, and constitutes a part of the communication system, to help a terminal implement radio access. In subsequent descriptions of this application, unless otherwise specified, the "access network device" is used for description.

It may be understood that the access network device may be referred to as a communication apparatus. For example, the access network device may be understood as an apparatus having a function of the access network device. For example, an apparatus configured to implement a function of the access network device may be an access network device, or some elements in the access network device, for example, a CU or a DU. Alternatively, the apparatus may be an apparatus that can support the access network device in implementing the function, for example, a chip system, a hardware circuit, a software module, or a hardware circuit and a software module. The apparatus may be installed in the access network device or may be used in cooperation with the access network device. In embodiments of this application, the chip system may include a chip, or may include a chip and another discrete component.

### 1.2. Terminal

The terminal may also be referred to as a terminal device, user equipment (user equipment, UE), a mobile station, a mobile terminal, or the like. The terminal may be widely used in various scenarios, for example, device-to-device (device-to-device, D2D) communication, vehicle-to-everything (vehicle-to-everything, V2X) communication, machine-type communication (machine-type communication, MTC), internet of things (internet of things, IOT), virtual reality (virtual reality, VR), augmented reality (augmented reality, AR), industrial control, autonomous driving, telemedicine, a smart grid, smart furniture, a smart office, a smart wearable, smart transportation, and a smart city. The terminal may be a mobile phone, a head-mounted display device, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

It may be understood that the terminal may be referred to as a communication apparatus. For example, the terminal may be understood as an apparatus having a function of the terminal. For example, an apparatus configured to implement the function of the terminal may be a terminal, or may be an apparatus that can support the terminal in implementing the function, for example, a chip system, a hardware circuit, a software module, or a hardware circuit and a software module. The apparatus may be installed in the terminal or may be used in cooperation with the terminal.

### 2. CN

The CN 200 includes at least one core network element. A 5G communication system is used as an example. The CN 200 includes an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, and the like.

In the communication system shown in FIG. 1, an electromagnetic map is provided in an access network device. For example, the access network device establishes the electromagnetic map by measurement, environment modeling and ray tracing (ray tracing, RT), or artificial intelligence (artificial intelligence, AI). The electromagnetic map is used to represent distribution of electromagnetic signals in an environment, and records strength and characteristics of various electromagnetic signals in a specific area. For example, the electromagnetic map may partially or completely include but is not limited to multipath information, noise levels, and spectrum occupancy of one or more locations. For example, the electromagnetic map may include information about a regular area and/or information about an irregular area. Each area corresponds to one or more reference points. The regular area may also be referred to as a grid area, and a reference point corresponding to the grid area may also be referred to as a grid, a grid point, or the like. For example, an area may include the following information:
1. Channel state information
   (a) at least one path, where each path corresponds to one piece of multipath information; and
   (b) a scalar intensity indicator, for example, a channel impulse response (channel impulse response, CIR), a channel quality indicator (channel quality indicator, CQI), a power delay profile (power delay profile, PDP), or an angle delay profile (angle delay profile, ADP).
2. Information about a virtual anchor point (virtual anchor) of a scattering point or a virtual station.
3. Other Information

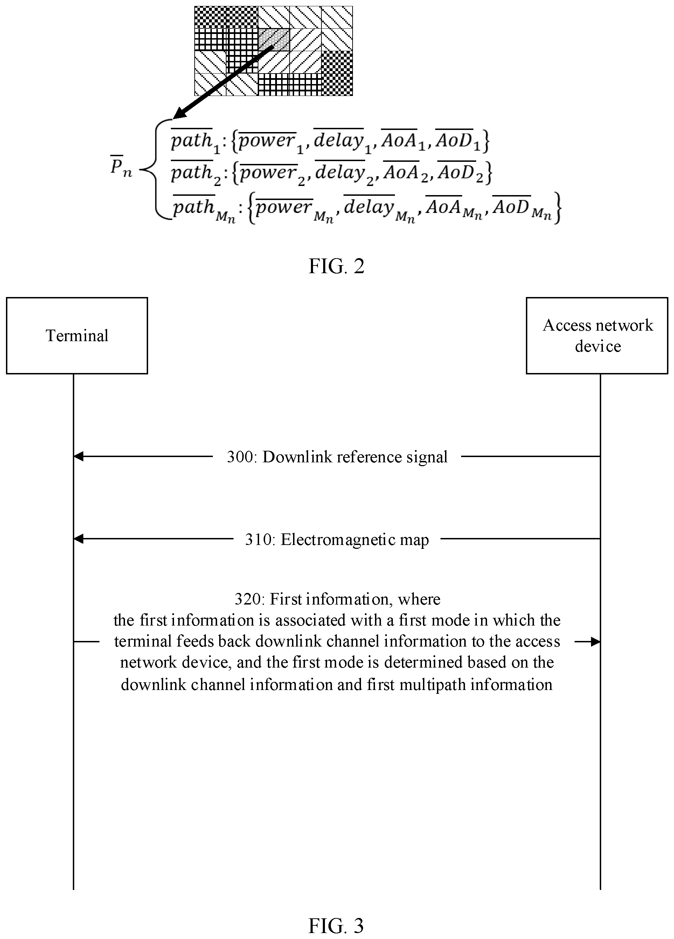

The multipath information in the channel state information is used as an example. An electromagnetic map ***P̅*** on an access network device side corresponds to at least one reference point, each reference point corresponds to one geographic area, and the electromagnetic map is used to represent multipath information from an access network device to a terminal in the geographic area. As shown in FIG. 2, the electromagnetic map ***P̅*** mainly includes:
1. electromagnetic map elements {*P̅*₁, *P̅*₂, ... , *P̅_{N}*} of N reference points, where N is an integer greater than 0;
2. an electromagnetic map element *P̅ₙ* of each reference point includes multipath information of *Mₙ* paths (path) between an access network device and the reference point, where *Mₙ* is an integer greater than 0; and
3. multipath information of each path may include amplitude, a delay (delay), and an angle. The amplitude may exist in a form of amplitude or a power (power) of a signal. If the access network device uses a dual-polarized antenna, amplitude is a 2*2 matrix, and the angle includes an angle of arrival (angle of arrival, AoA) and an angle of departure (angle of departure, AoD). Further, if the antenna array is a uniform linear array (uniform linear array, ULA), the AoA and the AoD are scalars. Alternatively, if the antenna array is a uniform planar array (uniform planar array, UPA), the AoA and the AoD may be represented by an azimuth angle and an elevation angle. In the following descriptions, an example in which the "amplitude" is "power" and the angle includes the AoA and the AoD is used for description.

In the communication system shown in FIG. 1, the access network device sends a downlink reference signal to the terminal, for example, a channel state information (channel state information, CSI) reference signal (reference signal RS). The terminal performs channel estimation on the downlink reference signal to obtain a channel estimation result. The channel estimation result includes a downlink channel matrix *H*, and the terminal determines CSI based on the downlink channel matrix *H*. The terminal feeds back the CSI to the access network device. The access network device recovers the downlink channel matrix *H* based on the received CSI. The access network device performs an operation such as precoding on downlink data based on the recovered downlink channel matrix *H*, to improve transmission quality of the downlink data. To reduce overheads of feeding back the CSI by the terminal to the access network device, the terminal compresses the CSI, and the terminal feeds back the compressed CSI to the access network device. The access network device decompresses the received compressed CSI, determines the CSI, and further recovers the downlink channel matrix *H*. For example, the terminal compresses the CSI by frequency domain transformation, quantization, or selection of a non-zero coefficient, or the terminal may compress the CSI in a manner such as AI. This is not limited.

Compared with CSI feedback, the terminal may feed back complete downlink channel information to the access network device, to improve quality of communication between the terminal and the access network device. The downlink channel information between the terminal and the access network device is determined by a transmission path between the terminal and the access network device and an electromagnetic environment. An electromagnetic map in wireless communication represents distribution of electromagnetic signals in the environment, and records strength and characteristics of electromagnetic signals in a specific area. How to feed back the downlink channel information to the access network device by the terminal based on the electromagnetic map is a research direction.

In view of this, embodiments of this application provide an information feedback method and an apparatus. The method includes: A terminal performs channel estimation on a downlink reference signal, to obtain downlink channel information. The terminal obtains first multipath information from an electromagnetic map. The terminal determines, based on the downlink channel information and the first multipath information, a first mode in which the terminal feeds back the downlink channel information to an access network device. The terminal feeds back first information to the access network device based on the first mode. The access network device may recover the downlink channel information between the access network device and the terminal based on the first information, to improve quality of communication between the terminal and the access network device.

In the following procedure description, the "terminal" and the "access network device" are used as execution bodies for description. The "terminal" may be understood as an apparatus having a function of the terminal. For example, "terminal" may be replaced with a "first communication apparatus", and the first communication apparatus is an apparatus that implements the function of the terminal. For example, the first communication apparatus is the terminal, or the first communication apparatus may be a module (for example, a chip or a circuit) in the terminal. The "access network device" may be understood as an apparatus having a function of the access network device. For example, the "access network device" may be replaced with a "second communication apparatus", and the second communication apparatus is an apparatus that implements the function of the access network device. For example, the second communication apparatus is the access network device, or the second communication apparatus may be a module (for example, a chip or a circuit) in the access network device, or may be a logical node (for example, a CU, a DU, or an RU), a logical module, software, or the like that implements all or a part of the function of the access network device.

As shown in FIG. 3, an embodiment of this application provides a schematic flowchart, including the following steps.

Step 300: An access network device sends a downlink reference signal to a terminal, and the terminal receives the downlink reference signal from the access network device.

Optionally, the downlink reference signal may also be referred to as a downlink pilot, which is referred to as a pilot for short. The downlink reference signal is used to determine downlink channel information. For example, the terminal determines the downlink channel information based on the downlink reference signal. The downlink channel information includes third multipath information, and the third multipath information is determined based on a channel estimation result of the downlink reference signal. For example, the terminal performs channel estimation on the downlink reference signal, to obtain the channel estimation result. The channel estimation result includes a downlink channel matrix *H*. The terminal extracts the third multipath information from the downlink channel matrix *H*. The third multipath information is obtained by the terminal by performing channel estimation based on the downlink reference signal, and the third multipath information may be referred to as local multipath information. For example, a method for determining the third multipath information includes but is not limited to the following methods:
1. The third multipath information is determined according to a conventional channel estimation and multipath estimation algorithm. For example, after channel estimation is performed on the downlink reference signal, a delay and an angle are estimated according to a conventional multipath estimation algorithm such as multiple signal classification (multiple signal classification, MUSIC), estimating signal parameter via rotational invariance techniques (estimating signal parameter via rotational invariance techniques, ESPRIT), or an iterative adaptive approach (iterative adaptive approach, IAA), and then delays and angles corresponding to N large peak values are extracted according to a peak search algorithm, and are used as the third multipath information.
2. The third multipath information is determined according to an AI-based channel multipath extraction algorithm, for example, multipath estimation by using a neural network. For example, the downlink channel matrix H is input into an AI model, and an output of the AI model includes the third multipath information.
3. The third multipath information is determined according to a prediction-based multipath estimation algorithm, for example, a prediction solution based on Kalman filtering.

Alternatively, the terminal determines the CSI based on the downlink channel matrix H, and extracts the third multipath information and the like from the CSI. This is not limited. For example, the third multipath information includes a delay (delay), an AoA, and an AoD. It may be understood that the third multipath information includes multipath information of one path or multipath information of a plurality of paths, and multipath information of each path includes a delay, an AoA, and an AoD. For example, a format of the third multipath information *P* is as follows:$P : \left\{{path}_{1},{path}_{2},…,{path}_{M}\right\} = \left\{\left\{{delay}_{1}, {AoA}_{1}, {AoD}_{1}\right\},\left\{{delay}_{2}, {AoA}_{2}, {AoD}_{3}\right\},…\left\{{delay}_{M}, {AoA}_{m}, {AoD}_{M}\right\}\right\}$

In the foregoing example, the third multipath information is represented as *P*, the third multipath information includes multipath information of *M* paths (path), *M* is an integer greater than 0, and multipath information of each path includes a delay (delay), an AoA, and an AoD.

In a possible implementation, the terminal includes a radio frequency module (component) and a processing module (component). For example, the processing module includes a chip, for example, a system on chip (System on Chip, SoC), and the radio frequency module may include a radio frequency front-end or a radio frequency front-end assembly. The radio frequency module receives the downlink reference signal from the access network device through an air interface. The processing module obtains the downlink reference signal through the radio frequency module. In step 300, "receiving the downlink reference signal from the access network device" may be replaced with "obtaining the downlink reference signal". For example, the processing module of the terminal obtains the downlink reference signal. It may be understood as: The processing module of the terminal obtains information about the downlink reference signal through an input/output (input/output, I/O) interface. For another example, the radio frequency module of the terminal obtains the downlink reference signal. It may be understood as: The radio frequency module of the terminal receives the downlink reference signal from the access network device.

Step 310: The access network device sends an electromagnetic map to the terminal, and the terminal receives the electromagnetic map from the access network device.

For example, the electromagnetic map includes first multipath information. In a possible implementation, the terminal determines a reference point based on the downlink channel information, and multipath information corresponding to the reference point is referred to as the first multipath information. In this case, it may be described as follows: The reference point of the first multipath information matches the downlink channel information.

For example, the electromagnetic map includes at least one reference point, and the reference point is also referred to as a grid point. As shown in FIG. 2, each reference point corresponds to one electromagnetic map element or multipath information *P̅ₙ*, *P̅ₙ* includes multipath information of *Mₙ* paths, and *Mₙ* is an integer greater than 0.
1. The terminal matches one reference point in the electromagnetic map based on the third multipath information included in the downlink channel information, and multipath information corresponding to the reference point is referred to as the first multipath information.

For example, the terminal determines a distance between the third multipath information and each reference point in the electromagnetic map, and determines, in the electromagnetic map, a reference point with a smallest distance to the third multipath information. Multipath information corresponding to the reference point is the first multipath information, and the first multipath information may be referred to as map multipath information. For example, the electromagnetic map includes five reference points. The terminal separately determines distances between the third multipath information and the five reference points. The terminal determines, from the five reference points, a reference point with a smallest distance to the third multipath information, and multipath information corresponding to the reference point is referred to as the first multipath information. Optionally, the terminal determines the distance between the third multipath information and the reference point in the following manner:

The third multipath information includes multipath information of at least one path. For example, the third multipath information includes multipath information of *M* paths, *M* is an integer greater than 0, and the third multipath information *P* is represented as :{*path*₁, ... , *path_{M}*}. Multipath information *P̅ₗ* of a reference point *l* in the electromagnetic map includes multipath information of *Mₗ* paths, the multipath information *P̅ₗ* of the reference point *l* is represented as {*p̅a̅t̅h̅*₁, *p̅a̅t̅h̅*₂, ... , *p̅a̅t̅h̅_{Mₗ}*}, *Mₗ* is an integer greater than 0, and the reference point *l* is any reference point in the electromagnetic map.

For a path m in the third multipath information *P*, the path m is represented as *pathₘ*, where m is a positive integer greater than or equal to 1 and less than or equal to M. The terminal determines a distance between the path *pathₘ* and each path in the multipath information *P̅ₗ* of the reference point *l*. Optionally, a distance between two paths is equal to a Euclidean distance between delays, AoAs, or AoDs of the two paths. The terminal determines, in paths of the reference point *l*, a path with a smallest distance to the path *pathₘ*, where the path may be represented as *p̅a̅t̅h̅ₙ*. A value of m is traversed from 1 to M, and distances between the path *pathₘ* and the path *p̅a̅t̅h̅ₙ* are summed, and a result of summation is referred to as a distance between the third multipath information *P* and the multipath information *P̅ₗ* of the reference point *l*. It may be understood that the distance between the third multipath information *P* and the multipath information *P̅ₗ* of the reference point *l* may be referred to as a distance between the third multipath information *P* and the reference point *l*. For example, the distance between the third multipath information P and the multipath information *P̅ₗ* of the reference point *l* satisfies: $d \left(P, {\overline{P}}_{l}\right) = {\sum }_{m = 1}^{M} d \left({path}_{m}, {\overline{P}}_{l}\right) = {\sum }_{m = 1}^{M} {min}_{{\overline{path}}_{n} ∈ {\overline{P}}_{l}} d \left({path}_{m}, {\overline{path}}_{n}\right)$

*d*(*pathₘ*, *p̅a̅t̅h̅ₙ*) represents the distance between the path *path*ₘ in the third multipath information *P* and the path *p̅a̅t̅h̅ₙ* in the multipath information *P̅ₗ* of the reference point *l*.

2. The terminal matches a plurality of reference points in the electromagnetic map based on the third multipath information, and multipath information corresponding to the plurality of reference points is referred to as the first multipath information.

For example, the terminal determines, from the reference points in the electromagnetic map, first *K* reference points with smaller distances to the third multipath information, where *K* is an integer greater than 1. For example, the terminal determines, from the five reference points in the electromagnetic map, first two reference points with smaller distances to the third multipath information, where a value of *K* is equal to 2. In this case, multipath information of the *K* reference points is referred to as the first multipath information. Optionally, the multipath information (the first multipath information) of the *K* reference points is represented as {*P̅*₁, ... , *P̅_{K}*}.

In another possible implementation, the terminal determines the reference point in the electromagnetic map based on location information of the terminal, and multipath information corresponding to the reference point is referred to as the first multipath information. In this case, it may be described as: The reference point corresponding to the first multipath information matches the location information of the terminal.
1. The terminal matches one reference point in the electromagnetic map based on the location information of the terminal, and multipath information corresponding to the reference point is referred to as the first multipath information.

For example, the location information of the terminal includes geographical location coordinates of the terminal. For example, the geographical location coordinates of the terminal include longitude and latitude coordinates of the terminal. Further, a height coordinate of the terminal is included. The terminal determines one reference point with a smallest distance to the terminal in the electromagnetic map based on the location information of the terminal, and multipath information corresponding to the reference point is referred to as the first multipath information. The reference point with a smallest distance to the terminal is represented as a reference point *l*, and multipath information (the first multipath information) of the reference point *l* is represented as *P̅ₗ*. It may be understood that, when the distance from the terminal to the reference point is measured, a central location of the reference point is used as a reference. That is, the terminal may calculate a distance from the terminal to the central location of the reference point, and use the distance from the terminal to the central location of the reference point as the distance from the terminal to the reference point. Alternatively, the terminal determines the matched reference point in the electromagnetic map based on the location information of the terminal. For example, a geographical area corresponding to the matched reference point may cover a location of the terminal, and multipath information corresponding to the matched reference point is referred to as the first multipath information.

2. The terminal matches a plurality of reference points in the electromagnetic map based on the location information of the terminal, and multipath information corresponding to the plurality of reference points is referred to as the first multipath information.

For example, the terminal determines, in the electromagnetic map based on the location information of the terminal, *K* reference points with small distances to the terminal, where *K* is an integer greater than 1. Alternatively, the terminal determines the *K* associated reference points in the electromagnetic map based on the location information of the terminal. For example, a distance between a central location of each of the *K* associated reference points and a location of the terminal is less than a threshold. Multipath information of the *K* reference points is referred to as the first multipath information.

In a possible implementation, "receiving the electromagnetic map from the access network device" in step 310 may be replaced with "obtaining the electromagnetic map". For example, the processing module of the terminal obtains the electromagnetic map. It may be understood as: The processing module of the terminal obtains information about the electromagnetic map through the I/O interface. For another example, the radio frequency module of the terminal obtains the electromagnetic map. It may be understood as: The radio frequency module of the terminal receives the electromagnetic map from the access network device.

It may be understood that in step 310, an example in which the access network device transmits the electromagnetic map to the terminal and the terminal obtains the electromagnetic map from the access network device is used for description, and this is not limited. The terminal may further obtain the electromagnetic map in another manner. For example, the terminal obtains the electromagnetic map in a device to device (device to device, D2D) manner. For example, another terminal transmits the electromagnetic map to the terminal. Alternatively, in step 310, a plurality of access network devices may send electromagnetic maps to the terminal, and the terminal determines, based on the electromagnetic maps sent by the plurality of access network devices, the electromagnetic map described in this embodiment of this application. For example, the plurality of access network devices separately send a part of the electromagnetic map, and the terminal combines the plurality of parts of the electromagnetic map to form the complete electromagnetic map.

Step 320: The terminal sends first information to the access network device, and the access network device receives the first information from the terminal.

It may be understood that, in the descriptions of this application, "sending" may be replaced with "feeding back". For example, that the terminal sends the first information to the access network device may be replaced with: The terminal feeds back the first information to the access network device. In a possible implementation, in step 320, the radio frequency module of the terminal may send the first information to the access network device through the air interface. For example, the processing module of the terminal outputs the first information to the radio frequency module through the I/O interface, and the radio frequency module of the terminal sends the first information to the access network device through the air interface.

The first information is associated with a first mode in which the terminal feeds back the downlink channel information to the access network device, and the first mode is determined based on the downlink channel information and the first multipath information. Further, the first mode is determined based on the downlink channel information, the first multipath information, and second multipath information. The second multipath information is obtained by calibrating (adjusting) the downlink channel information based on the first multipath information, and the second multipath information may be referred to as calibrated (adjusted) multipath information.
1. The terminal calibrates the downlink channel information based on the first multipath information, to determine the second multipath information.

For example, the second multipath information includes an AoA and an AoD, and the AoA and the AoD of the second multipath information are determined based on the downlink channel information. For example, the downlink channel information includes the third multipath information, and the AoA and the AoD in the second multipath information are determined based on an AoA and an AoD in the third multipath information. Optionally, the second multipath information further includes a power and a delay, and the power is determined based on the first multipath information. For example, the power is determined based on a power in the first multipath information. The delay is determined based on the first multipath information. For example, the delay is determined based on a delay in the first multipath information, or the delay is determined based on the downlink channel information. For example, the delay is determined based on a delay in the third multipath information included in the downlink channel information. In the following descriptions, an example in which the second multipath information includes the power, the delay, the AoA, and the AoD is used to describe a process in which the terminal determines the second multipath information.

Example 1: The terminal matches one reference point in the electromagnetic map, and multipath information corresponding to the reference point is referred to as the first multipath information.

For example, the terminal matches one reference point in the electromagnetic map. A specific matching rule may be matching based on the third multipath information included in the downlink channel information, or matching based on the location information of the terminal. For ease of understanding, in the following descriptions, the third multipath information included in the downlink channel information is referred to as local multipath information, the first multipath information is referred to as map multipath information, and the second multipath information is referred to as calibrated multipath information.

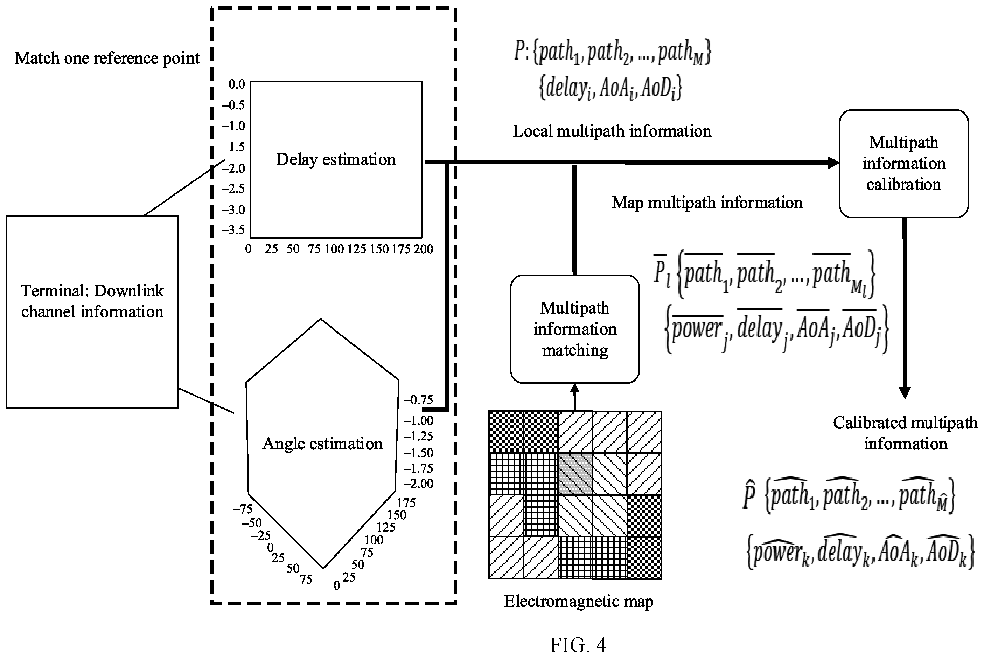

In a possible implementation, as shown in FIG. 4, the terminal performs channel estimation on the downlink reference signal, to determine the downlink channel information, for example, a downlink channel matrix *H*. The terminal performs delay estimation and angle estimation on the downlink channel information, to determine local multipath information. The local multipath information includes multipath information of *M* paths, the local multipath information P is represented as : {*path*₁, *..., path_{M}*}, and multipath information of each path includes a delay, an AoA, and an AoD. For example, an i^{th} path *pathᵢ* is represented as *:* {*delayᵢ, AOAᵢ, AODᵢ*}, where i is an integer greater than 1 and less than or equal to M. In the electromagnetic map, the terminal successfully matches a reference point *l,* and multipath information of the reference point *l* is referred to as map multipath information, and includes *Mₗ* paths. The map multipath information *P̅ₗ* is represented as {*p̅a̅t̅h̅*₁, *p̅a̅t̅h̅*₂*, ... , p̅a̅t̅h̅_{Mₗ}*}, and multipath information of each path includes a power, a delay, an AoA, and an AoD. For example, multipath information *p̅a̅t̅h̅ⱼ* of a j^{th} path is represented as {*p̅o̅w̅e̅r̅ⱼ, d̅e̅l̅a̅y̅ⱼ, A̅O̅A̅ⱼ, A̅O̅D̅ⱼ*}.

The terminal calibrates the local multipath information based on multipath information of a matched reference point (for example, the reference point *l*), and determines calibrated multipath information. It may be understood that the map multipath information includes multipath information of a plurality of paths, and the local multipath information includes multipath information of a plurality of paths. In this embodiment of this application, a path in the map multipath information is first matched with a path in the local multipath information, and then a corresponding path in the local multipath information is calibrated based on the matched path in the map multipath information, to determine the calibrated multipath information.

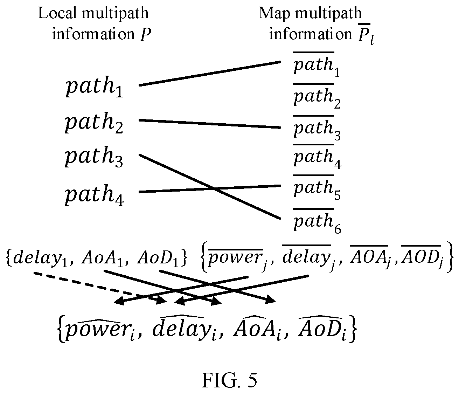

For example, for the path *pathᵢ* in the local multipath information *P,* a path *p̅a̅t̅h̅ⱼ* with a smallest distance to the path *pathᵢ* is determined in the map multipath information *P̅ₗ*. In this case, it is considered that the two paths match and may have a correspondence (*pathᵢ, p̅a̅t̅h̅ⱼ*). Optionally, a distance between two paths may be measured by using a function *d(P, P̅ₗ*). As shown in FIG. 5, a value of *M* is equal to 4, and the local multipath information P is represented as : *{path,, path*₂, *path*₃*, path*₄}. If a value of *Mₗ* is equal to 6, the map multipath information *P̅ₗ* is represented as {*p̅a̅t̅h̅*₁, *path*₂, *p̅a̅t̅h̅*₃, *p̅a̅t̅h̅*₄, *p̅a̅t̅h̅*₅*, p̅a̅t̅h̅*₆}. In the map multipath information *P̅ₗ*, a path with a smallest distance to a path *path*₁ is *p̅a̅t̅h̅*₁, and the two paths match and have a correspondence (*path*₁, *p̅a̅t̅h̅*₁). Similarly, a path *path,* matches a path *p̅a̅t̅h̅*₃, to form a correspondence (*path*₂, *p̅a̅t̅h̅*₃); a path *path*₃ matches a path *p̅a̅t̅h̅*₆, to form a correspondence (*path*₃, *p̅a̅t̅h̅*₆); and a path *path*₄ matches a path *p̅a̅t̅h̅*₅*,* to form a correspondence (*path*₄, *p̅a̅t̅h̅*₅).

Refer to FIG. 4. The calibrated multipath information includes *M̂* paths, where *M̂* is an integer greater than 0. The calibrated multipath information *P̂* is represented as $\left\{{\hat{path}}_{1},{\hat{path}}_{2},…,{\hat{path}}_{\hat{M}}\right\}$*,* and multipath information of each path includes a power, a delay, an AoA, and an AoD. An example in which a path *pathₖ* in the local multipath information matches a path *p̅a̅t̅h̅ⱼ* in the map multipath information, to form a correspondence (*pathₖ, p̅a̅t̅h̅ⱼ*) is used to describe a process in which the terminal determines multipath information of a k^{th} path ${\hat{path}}_{k}$ in the calibrated multipath information *P̂*. The multipath information of the k^{th} path ${\hat{path}}_{k}$ is represented as: $\left\{{\hat{power}}_{k}, {\hat{delay}}_{k}, {\hat{AOA}}_{k}, {\hat{AOD}}_{k}\right\}$*.*
1. The angle of departure ${\hat{AoA}}_{k}$ and the angle of arrival ${\hat{AoD}}_{k}$ use AoAₖ, AoDₖ of the path *pathₖ* in the local multipath information.
2. The power ${\hat{power}}_{k}$ uses a power *p̅o̅w̅e̅r̅ⱼ* of the path *p̅a̅t̅h̅ⱼ* in the map multipath information.
3. Multipath delay ${\hat{delay}}_{k}$:
   (a) A delay *d̅e̅l̅a̅y̅ⱼ* of the path *p̅a̅t̅h̅ⱼ* in the map multipath information is used.
   (b) A delay *d̅e̅l̅a̅y̅ⱼ* of the path *p̅a̅t̅h̅ⱼ* in the map multipath information or a delay *delayₖ* of the path *pathₖ* in the local multipath information. In a possible implementation, if a bandwidth of a measurement signal is greater than a threshold, the delay *delayₖ* is used. If the bandwidth of the measurement signal is less than or equal to the threshold, *d̅e̅l̅a̅y̅ⱼ* is used. Alternatively, if a time resolution of the measurement signal is less than a threshold, the delay *delayₖ* is used. If the time resolution of the measurement signal is greater than or equal to the threshold, *d̅e̅l̅a̅y̅ⱼ* is used.

Example 2: The terminal matches a plurality of reference points in the electromagnetic map, and multipath information corresponding to the plurality of reference points is referred to as the first multipath information.

For example, in the electromagnetic map, the terminal may match a plurality of reference points based on the third multipath information included in the downlink channel information, or match a plurality of reference points based on the location information of the terminal. For ease of understanding, in the following descriptions, the third multipath information included in the downlink channel information is referred to as local multipath information, the first multipath information is referred to as map multipath information, and the second multipath information is referred to as calibrated multipath information.

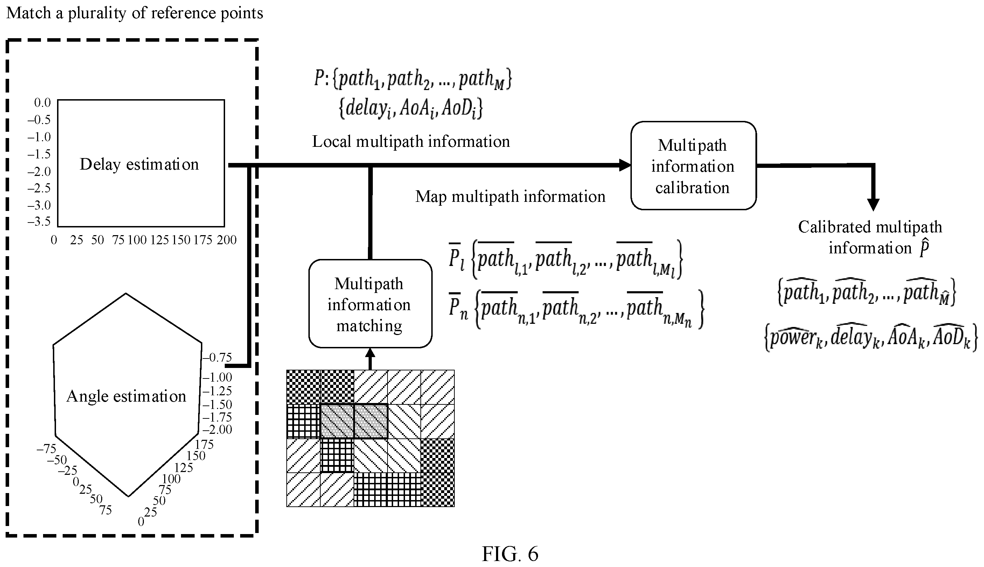

In a possible implementation, as shown in FIG. 6, the terminal performs delay estimation and angle estimation on the downlink channel information, and determines the local multipath information. The local multipath information P is represented as {*path*₁, *..., path_{M}*}. In the electromagnetic map, the terminal matches a plurality of reference points. Two reference points are matched, and the two reference points are represented as reference points *l* and *n.* Multipath information *P̅ₗ* of the reference point *l* includes *Mₗ* paths, which are represented as {*p̅a̅t̅h̅*_{*l,*1}, *p̅a̅t̅h̅*_{*l,*2}, ... *, p̅a̅t̅h̅_{l,Mₗ}*}. Multipath information *P̅ₙ* of the reference point *n* includes *Mₙ* paths, which are represented as {*p̅a̅t̅h̅*_{*n,*1}, *p̅a̅t̅h̅*_{*n,*2}*,* ... , *p̅a̅t̅h̅*_{*n,*Mₙ}}. Each path includes a power, a delay, an AoA, and an AoD.

For a k^{th} path *pathₖ* in the local multipath information P, matched paths of the plurality of reference points are separately determined. For example, paths of the reference point *l* and the reference point *n* that match the path pathₖ are respectively *p̅a̅t̅h̅_{l,j}* and *p̅a̅t̅h̅_{n,p},* and there is a correspondence {(*pathₖ, p̅a̅t̅h̅_{l,j}, p̅a̅t̅h̅_{n,p}*)} between the three paths.

The terminal calibrates multipath information of a matched path in the local multipath information based on multipath information of the paths of the plurality of reference points (for example, the reference point *l* and the reference point n), and determines the calibrated multipath information. For example, the terminal may calibrate multipath information of the matched path *pathₖ* in the local multipath information based on multipath information *p̅a̅t̅h̅_{l,j}* of the reference point *l* and multipath information *p̅a̅t̅h̅_{n,p}* of the reference point *n.* As shown in FIG. 6, the calibrated multipath information includes *M̂* paths, where *M̂* is an integer greater than 0. The calibrated multipath information *P̂* is represented as $\left\{{\hat{path}}_{1},{\hat{path}}_{2},…,{\hat{path}}_{\hat{M}}\right\}$*.* Multipath information of a k^{th} path ${\hat{path}}_{k}$ is represented as $\left\{{\hat{power}}_{k}, {\hat{delay}}_{k}, {\hat{AOA}}_{k}, {\hat{AOD}}_{k}\right\}$*,* and a determining process is as follows:
1. The angle of departure ${\hat{AoA}}_{k}$ and the angle of arrival ${\hat{AoD}}_{k}$ use *AoAₖ, AoDₖ* of the path *pathₖ* in the local multipath information.
2. Power ${\hat{power}}_{k}$: There is a path that matches the path *pathₖ* in multipath information of each of the foregoing plurality of reference points, and powers in the foregoing matched paths are fused to determine the power ${\hat{power}}_{k}$.
   For example, in the electromagnetic map, the matched reference points are the reference point *l* and the reference point *n*. The terminal fuses a power *p̅o̅w̅e̅r̅_{l,j}* of the matched path *p̅a̅t̅h̅_{l,j}* in the map multipath information *P̅ₗ* of the reference point *l* with a power *p̅o̅w̅e̅r̅_{n,p}* of the matched path *p̅a̅t̅h̅_{n,p}* in the multipath information *P̅ₙ* of the reference point *n*, and a result of fusing the two is equal to the power ${\hat{power}}_{k}$. For example, a fusion manner includes: weighted averaging *p̅o̅w̅e̅r̅_{l,j}* and *p̅o̅w̅e̅r̅_{n,p}* according to *d* (*pathₖ, path_{l,j}*) and *d* (*pathₖ*, *p̅a̅t̅h̅_{n,p}*).
3. Delay ${\hat{delay}}_{k}$:
   (a) There is a path that matches the path *pathₖ* in multipath information of each of the foregoing plurality of reference points, and delays of the foregoing matched paths are fused to determine a delay ${\hat{delay}}_{k}$.
      For example, in the electromagnetic map, the matched reference points are the reference point *l* and the reference point *n*. The terminal fuses a delay *p̅o̅w̅e̅r̅_{l,j}* of the matched path *p̅a̅t̅h̅_{l,j}* in the map multipath information *Pₗ* of the reference point *l* with a delay *delay_{n,p}* of the matched path *p̅a̅t̅h̅_{n,p}* in the multipath information *P̅ₙ* of the reference point *n*, and a result of fusing the two is equal to the delay ${\hat{delay}}_{k}$. For example, a fusion manner includes: weighted averaging *p̅o̅w̅e̅r̅_{l,j}* and *d̅e̅l̅a̅y̅_{n,p}* according to *d* (*pathₖ*, *p̅a̅t̅h̅_{l,j}*) and *d* (*pathₖ*, *p̅a̅t̅h̅_{n,p}*).
   (b) Delays of paths that match the path *pathₖ* in the multipath information of the plurality of reference points are fused, or a delay *delayₖ* in the local multipath information is used. For example, if a bandwidth of a measurement signal is greater than a threshold, the delay *delayₖ* is used. If the bandwidth of the measurement signal is less than or equal to the threshold, a fusion result is used. Alternatively, if a time resolution of the measurement signal is less than a threshold, the delay *delayₖ* is used. If the time resolution of the measurement signal is greater than or equal to the threshold, a fusion result is used.

According to the foregoing design, the local multipath information is corrected based on the electromagnetic map, so that prior knowledge of a physical channel can be effectively used, to help optimize channel data feedback, and improve performance. Further, the third multipath information (that is, the local multipath information) is calibrated, and a problem that a delay is low in resolution due to bandwidth limitation and power estimation is inaccurate can be resolved.

2. The terminal determines the first mode based on the downlink channel information, the first multipath information, and the second multipath information.

For example, the terminal determines a first reconstructed channel based on the first multipath information; the terminal determines a second reconstructed channel based on the second multipath information; and the terminal determines the first mode based on similarities between a first channel corresponding to the downlink channel information and the first reconstructed channel and between the first channel and the second reconstructed channel. In this case, it may be described as follows: The first mode is determined based on the similarities between the first channel and the first reconstructed channel, and between the first channel and the second reconstructed channel. The first reconstructed channel is determined based on the first multipath information, the second reconstructed channel is determined based on the second multipath information, and the first channel is a channel corresponding to the downlink channel information. For example, the terminal determines the first channel based on the downlink reference signal. For example, the downlink channel information includes the third multipath information. The terminal may provide the third multipath information on the first channel, and the first channel may be referred to as a local channel. The local channel may be represented by using a downlink channel matrix H. Therefore, the local channel may also be represented as a local channel *H*.

Example 1: The first mode is determined based on a threshold and the similarities between the first channel and the first reconstructed channel, and between the first channel and the second reconstructed channel.

The threshold may be preset (for example, specified in a protocol), or may be configured by the access network device for the terminal. For example, the access network device sends indication information of the threshold to the terminal, and the terminal receives the indication information of the threshold from the access network device. It may be understood that, that the terminal receives the indication information of the threshold from the access network device may be replaced with: obtaining the indication information of the threshold from the access network device. For example, the threshold may include a first threshold and/or a second threshold.

In the following descriptions, the third multipath information is referred to as local multipath information, the first multipath information is referred to as map multipath information, and the second multipath information is referred to as calibrated multipath information. The first reconstructed channel is referred to as a map reconstructed channel *H̅ₗ*, the second reconstructed channel is referred to as a calibrated reconstructed channel *Ĥ*, and the first channel is referred to as a local channel *H*.

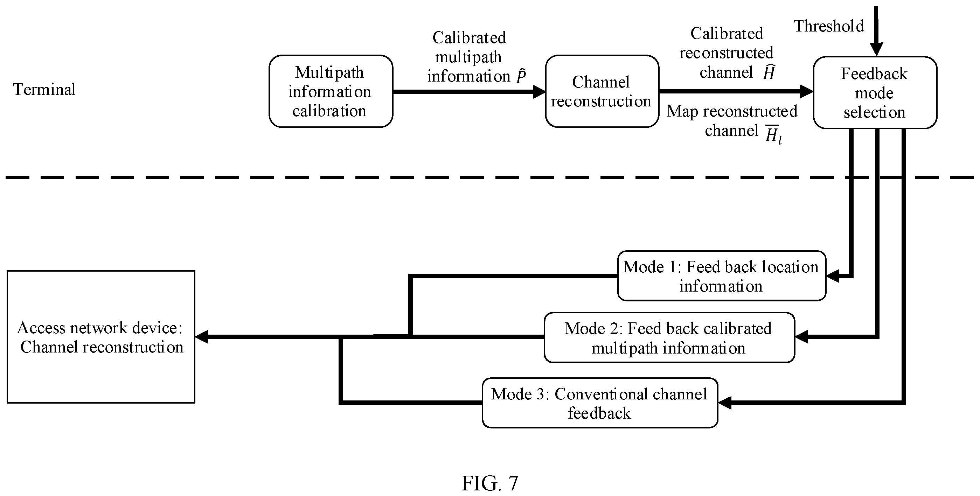

As shown in FIG. 7, after the terminal calibrates the local multipath information to obtain the calibrated multipath information P̂, the terminal reconstructs channels based on the map multipath information *P̅ₗ* and the calibrated multipath information *P̂*, to obtain the map reconstructed channel *H̅ₗ* and the calibrated reconstructed channel *Ĥ*. A channel reconstruction manner is not limited. For example, a specific channel model may be used to reconstruct a channel. For example, a cluster model is used to reconstruct a channel, or an AI manner is used to reconstruct a channel. For example, a reconstruction manner satisfies: $H \left(f\right) = {\sum }_{i} a \left({AoA}_{i}, {AoD}_{i}, {power}_{i}\right) {e}^{- j 2 πf {delay}_{i}}$

*a*(*AoAᵢ, AoDᵢ, powerᵢ*) represents a steering vector matrix. For example, when the calibrated reconstructed channel *Ĥ* is reconstructed, a value may be multipath information of a path in the calibrated multipath information *P̂*. Alternatively, when the map reconstructed channel *H̅ₗ* is reconstructed, a value may be multipath information of a path in the map multipath information *P̅ₗ*.

The terminal determines similarities between the local channel *H* and the map reconstructed channel *H̅ₗ*, and between the local channel *H* and the calibrated reconstructed channel *Ĥ*. The terminal determines the first mode based on a value relationship between the threshold and the similarities between the local channel H and the map reconstructed channel *H̅ₗ*, and between the local channel H and the calibrated reconstructed channel *Ĥ*. It may be understood that the terminal performs channel estimation on the downlink reference signal, and determines a channel estimation result. The channel estimation result includes the local channel *H*.

For example, the terminal may measure, by using a cosine similarity g(·) function, the similarities between the local channel *H* and the map reconstructed channel *H̅ₗ*, and between the local channel *H* and the calibrated reconstructed channel *Ĥ*. For example, a similarity between the map reconstructed channel *H̅ₗ* and the local channel *H* is represented as g(*H̅ₗ*, *H*), and a similarity between the calibrated reconstructed channel *Ĥ* and the local channel *H* is represented as g(*Ĥ*, *H*).

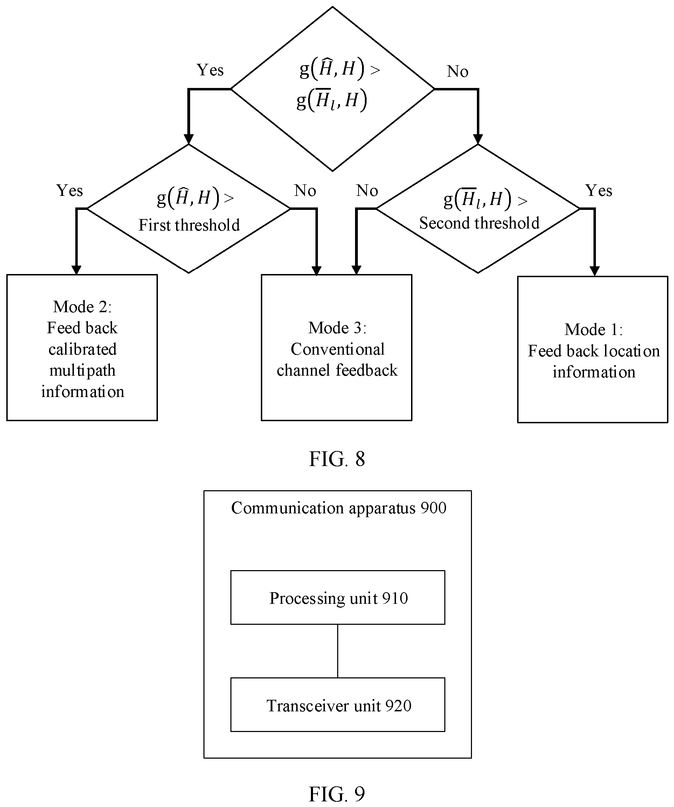

In a possible implementation, as shown in FIG. 8, when g(*Ĥ*, *H*) is greater than g(*H̅ₗ*, *H*), the similarity between the calibrated reconstructed channel *Ĥ* and the actual local channel *H* is higher. When g(*Ĥ*, *H*) is greater than the first threshold, the terminal determines that the first mode is a mode 2: feeding back the calibrated multipath information (that is, the second multipath information). Alternatively, when g(*Ĥ*, *H*) is less than or equal to the first threshold, the terminal determines that the first mode is a mode 3: conventional channel feedback. For example, the conventional channel feedback may be CSI type II. For example, in the conventional channel feedback, the terminal feeds back CSI information to the access network device, or compresses the CSI information, and the conventional channel feedback may be referred to as CSI-related information feedback.

In another possible implementation, still refer to FIG. 8. When g(*Ĥ*, *H*) is less than or equal to g(*H̅ₗ, H*), the similarity between the map reconstructed channel *H̅ₗ* and the actual local channel *H* is higher. When g(*H̅ₗ*, *H*) is greater than the second threshold, the terminal determines that the first mode is a mode 1: feeding back the location information. Alternatively, when g(*H̅ₗ*, *H*) is less than or equal to the second threshold, the terminal determines that the first mode is the mode 3: conventional channel feedback.

It may be understood that values of the first threshold and the second threshold may be equal or unequal. This is not limited.

Example 2: The first mode is determined based on similarities between the first channel and the first reconstructed channel, between the first channel and the second reconstructed channel, and between the first channel and a third reconstructed channel. The third reconstructed channel is a reconstructed channel corresponding to CSI-related information.

In the following descriptions, the third multipath information is referred to as local multipath information, the first multipath information is referred to as map multipath information, and the second multipath information is referred to as calibrated multipath information. The first reconstructed channel is referred to as a map reconstructed channel *Hₗ*, the second reconstructed channel is referred to as a calibrated reconstructed channel *Ĥ*, the third reconstructed channel is referred to as a reconstructed channel *H'* corresponding to conventional channel feedback, and the first channel is referred to as a local channel *H*.

The terminal reconstructs the map reconstructed channel *H̅ₗ* based on the map multipath information, reconstructs the calibrated reconstructed channel *Ĥ* based on the calibrated multipath information, and reconstructs the conventional channel feedback channel *H'* based on CSI-related information corresponding to conventional channel feedback. The terminal determines similarities between the local channel *H* and the map reconstructed channel *H̅ₗ*, between the local channel *H* and the calibrated reconstructed channel *Ĥ*, and between the local channel *H* and the conventional channel feedback channel *H'*. For example, a cosine similarity g(·) may be used to measure a similarity between two channels. For example, a similarity between the map reconstructed channel H̅ₗ and the local channel *H* is represented as g(*H̅ₗ*, *H*), a similarity between the calibrated reconstructed channel Ĥ and the local channel *H* is represented as g(*Ĥ*, *H*), and a similarity between the conventional channel feedback information *H'* and the local channel *H* is represented as g(*H'*, *H*).

In a possible implementation, the terminal determines a value relationship between the foregoing three similarities. For example, when a value of g(*H̅ₗ*, *H*) is the largest, the terminal determines that the first mode is a mode 1: feeding back the location information. Alternatively, when a value of g(*Ĥ*, *H*) is the largest, the terminal determines that the first mode is a mode 2: feeding back the calibrated multipath information. Alternatively, when a value of g(*H'*, *H*) is the largest, the terminal determines that the first mode is a mode 3: conventional channel feedback.

3. The terminal sends the first information to the access network device based on the first mode.

For example, when the first mode includes feeding back the location information (for example, the mode 1), the first information includes the location information, and the location information includes the location information of the terminal, for example, geographical location information of the terminal, for example, longitude and latitude coordinates of the terminal, and further height coordinate of the terminal. Alternatively, the location information includes location information of the reference point corresponding to the first multipath information, and the location information of the reference point may be an identifier or an index (index) of the reference point, or coordinates of the reference point. The coordinates of the reference point may be coordinates of the reference point in the electromagnetic map.

It may be understood that, when the terminal feeds back the location information to the access network device, air interface overheads of feeding back the information by the terminal are less than those of feeding back CSI information or multipath information. In addition, because the access network device may recover corresponding multipath information based on the location information that is fed back, same feedback effect is achieved. That is, feedback overheads of the terminal can be reduced when same or equivalent feedback effect is achieved.

When the first mode includes feeding back the second multipath information, and the feeding back the second multipath information is also referred to as feeding back the calibrated multipath information (for example, the mode 2), the first information includes the second multipath information. The second multipath information includes an *AoA* and an *AoD*. For example, the second multipath information includes *M̂* paths, and the second multipath information *P̂* is represented as $\left\{{\hat{path}}_{1},{\hat{path}}_{2},…,{\hat{path}}_{\hat{M}}\right\}$. The terminal feeds back *AoA*s and *AoD*s of the *M̂* paths to the access network device. In this case, the first information fed back by the terminal to the access network device is represented as $\left\{\left\{{\hat{AoA}}_{1}, {\hat{AoD}}_{1}\right\},…,\left\{{\hat{AoA}}_{\hat{M}}, {\hat{AoD}}_{\hat{M}}\right\}\right\}$.

Further, the second multipath information fed back by the terminal to the access network device further includes a power and/or a delay. For example, the terminal feeds back delays, *AoA*s, and *AoD*s of *M̂* paths to the access network device. In this case, the first information fed back by the terminal to the access network device is represented as $\left\{\left\{{\hat{delay}}_{1}, {\hat{AoA}}_{1}, {\hat{AoD}}_{1}\right\},…,\left\{{\hat{delay}}_{\hat{M}}, {\hat{AoA}}_{\hat{M}}, {\hat{AoD}}_{\hat{M}}\right\}\right\}$. Alternatively, the terminal feeds back powers, the *AoAs*, and the *AoDs* of the M paths to the access network device. In this case, the first information fed back by the terminal to the access network device is represented as $\left\{\left\{{\hat{power}}_{1}, {\hat{AoA}}_{1}, {\hat{AoD}}_{1}\right\},…,\left\{{\hat{power}}_{\hat{M}}, {\hat{AoA}}_{\hat{M}}, {\hat{AoD}}_{\hat{M}}\right\}\right\}$. Alternatively, the terminal feeds back the powers, the delays, the *AoAs*, and the *AoDs* of the M paths to the access network device. In this case, the first information fed back by the terminal to the access network device is represented as $\left\{\left\{{\hat{power}}_{1}, {\hat{delay}}_{1}, {\hat{AoA}}_{1}, {\hat{AoD}}_{1}\right\},…,\left\{{\hat{power}}_{\hat{M}}, {\hat{delay}}_{\hat{M}}, {\hat{AoA}}_{\hat{M}}, {\hat{AoD}}_{\hat{M}}\right\}\right\}$. Optionally, when the first mode includes feeding back the second multipath information, the terminal may further feed back the location information to the access network device.

When the first mode includes CSI-related information feedback, and CSI-related information feedback is also referred to as conventional channel feedback (for example, the mode 3), the first information includes the CSI-related information. For example, the terminal may compress the CSI information by using a CSI type II compression procedure, and the terminal feeds back the compressed CSI to the access network device.

When receiving the first information, the access network device may correspondingly process downlink data based on the first information. For example, the terminal reconstructs a downlink channel based on the first information, and reconstructing a downlink channel is also referred to as recovering a downlink channel matrix H. The terminal performs processing such as precoding on the downlink data based on the reconstructed downlink channel. For example, when the first information includes the second multipath information, the access network device processes the downlink data based on the second multipath information. It may be understood that, when the first information fed back by the terminal to the access network device includes the AoA and the AoD in the second multipath information, the access network device may match a corresponding reference point in the electromagnetic map based on the AoA and the AoD, and determine, based on multipath information corresponding to the reference point, the power and the delay corresponding to the second multipath information. Further, the downlink data is processed based on the power, the delay, the AoA, the AoD, and the like that are included in the second multipath information. Alternatively, when the first information includes the location information, for example, when the location information includes the location information of the terminal, the access network device determines a matched reference point in the electromagnetic map based on the location information of the terminal, and processes the downlink data based on multipath information corresponding to the reference point. Alternatively, when the first information includes the CSI-related information, for example, compressed CSI information, the access network device decompresses the compressed CSI information, and processes the downlink data based on the decompressed CSI information.

In a possible implementation, before step 300, the method further includes a pre-interaction process between the terminal and the access network device. The pre-interaction process may be actively initiated by the terminal, or actively initiated by the access network device. This is not limited. In the pre-interaction process, the following information may be exchanged between the terminal and the access network device:

### (a) Activation indication of channel feedback based on the electromagnetic map.

For example, when channel feedback based on the electromagnetic map is activated, for example, when the terminal receives the activation indication from the access network device, the terminal feeds back the first information to the access network device according to the method in this embodiment of this application.

### (b) Configuration of the electromagnetic map.

For example, the access network device may send a configuration parameter of the electromagnetic map to the terminal, and the terminal receives the electromagnetic map from the access network device based on the configuration parameter of the electromagnetic map. Alternatively, in the pre-interaction process, the access network device may configure or send the electromagnetic map to the terminal. In this case, the terminal and the access network device no longer perform step 310.

(c) Configuration of a transmission parameter. For example, the configuration of the transmission parameter includes at least one of the following:
i. The access network device may configure, for the terminal, a threshold for determining the first mode. For example, the threshold includes the first threshold and/or the second threshold.
ii. Specific formats of feeding back the multipath information and the location information by the terminal.
iii. Matching rules and calibration rules of the local multipath information and the map multipath information.
iv. The access network device and the terminal may agree on algorithms, models, calculation methods, and the like for channel estimation, multipath information calibration, and channel reconstruction.
v. The access network device and the terminal may agree on whether the terminal uses a positioning configuration. For example, the access network device and the terminal agree that the terminal uses the positioning configuration. The terminal may obtain the location information of the terminal, and match a reference point in the electromagnetic map based on the location information of the terminal, and/or the terminal feeds back the location information of the terminal to the access network device.

It may be understood that, in the pre-interaction process, the access network device may configure the foregoing parameters for the terminal by using upper-layer signaling such as radio resource control (radio resource control, RRC), or the access network device may dynamically indicate the foregoing parameters to the terminal by using downlink control information (downlink control information, DCI). For example, the access network device configures the foregoing parameters for the terminal by using the RRC signaling or the DCI. At a moment t0, the terminal feeds back the first information to the access network device based on the configured parameters. Then, the access network device dynamically indicates an update of the foregoing parameters to the terminal by using the DCI. At a moment t1, the terminal feeds back the first information to the access network device based on updated parameters.

According to the foregoing design, the terminal integrates the electromagnetic map into feedback of the downlink channel information, and the terminal may determine an information feedback mode based on a similarity between a reconstructed channel and the local channel *H*, to improve compression efficiency when good communication performance is maintained.

It may be understood that, in this embodiment of this application:
1. In each procedure, a sequence of different steps is not limited. For example, step 300 may be performed before step 310, or step 310 may be performed before step 300. To be specific, the terminal may first receive the electromagnetic map from the access network device, and then receive the downlink reference signal from the access network device. In addition, each procedure may include fewer steps or more steps than the schematic flowchart or the text description.
2. In embodiments of this application, "(for example, a terminal) receiving information from (for example, an access network device)" may be understood as: a source of the information is the access network device, and a destination of the information is the terminal, and may include directly or indirectly receiving the information by the terminal from the access network device. Information may undergo necessary processing, for example, a format change, between the source for sending the information and the destination. However, the destination may understand valid information from the source. Similar descriptions in this application may be construed in a similar manner, and details are not described herein again.

The foregoing embodiments of this application describe the method provided in embodiments of this application from a perspective of interaction between the terminal and the access network device. To implement functions in the method provided in embodiments of this application, the terminal, the access network device, or the like may include a hardware structure and/or a software module, to implement the foregoing functions in a form of a hardware structure, a software module, or a combination of the hardware structure and the software module. Whether a function in the foregoing functions is performed in a manner of a hardware structure, a software module, or a hardware structure and a software module depends on specific applications and design constraints of the technical solutions.

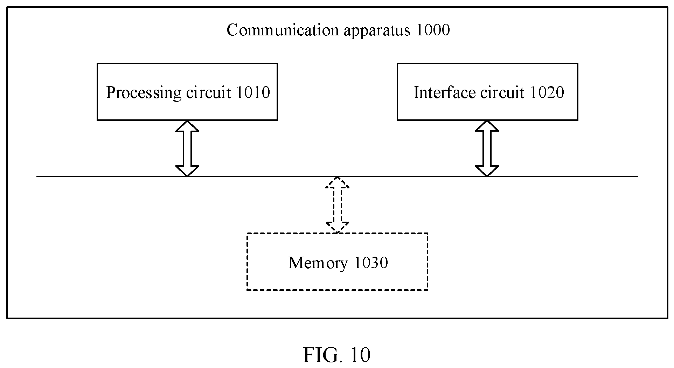

FIG. 9 and FIG. 10 are diagrams of possible structures of communication apparatuses according to an embodiment of this application. These communication apparatuses may implement one or more corresponding functions in the foregoing method embodiments, for example, functions implemented by the first communication apparatus, the second communication apparatus, or the like, to achieve beneficial effects of the foregoing method embodiment. In embodiments of this application, the communication apparatus may be a terminal or an access network device, or the communication apparatus may be a module (for example, a chip) used in the terminal or the access network device.

As shown in FIG. 9, a communication apparatus 900 includes a processing unit 910 and a transceiver unit 920. The communication apparatus 900 is configured to implement a function of the terminal or the access network device in the foregoing method embodiment in FIG. 3.

Optionally, the transceiver unit 920 may also be referred to as an output unit, an interface unit, a communication unit, or the like. In a possible implementation, the transceiver unit 920 includes at least one of a sending unit or a receiving unit. The sending unit and the receiving unit may be integrated together, or may be two independent units, or the like.

When the communication apparatus 900 is configured to implement a function of the terminal in FIG. 3, specifically, the transceiver unit 920 is configured to obtain a downlink reference signal, where the downlink reference signal is used to determine downlink channel information. The transceiver unit 920 is further configured to obtain an electromagnetic map, where the electromagnetic map includes first multipath information. The processing unit 910 is configured to generate first information. The transceiver unit 920 is further configured to feed back the first information to a second communication apparatus, where the first information is associated with a first mode in which the first communication apparatus feeds back the downlink channel information to the second communication apparatus, and the first mode is determined based on the downlink channel information and the first multipath information.

In a possible implementation, the first information includes second multipath information and/or location information, the second multipath information is obtained by calibrating the downlink channel information based on the first multipath information, and the location information includes location information of the first communication apparatus or location information of a reference point corresponding to the first multipath information.

In a possible implementation, the second multipath information includes an angle of arrival and an angle of departure, and the angle of arrival and the angle of departure are determined based on the downlink channel information.

In a possible implementation, the second multipath information further includes a power and/or a delay, the power is determined based on the first multipath information, and the delay is determined based on the first multipath information or the downlink channel information.

In a possible implementation, the first mode includes feeding back the second multipath information.

In a possible implementation, the first mode includes feeding back the location information.

In a possible implementation, the first information includes channel state information CSI-related information.

In a possible implementation, the first mode includes feeding back the CSI-related information.

In a possible implementation, the transceiver unit 920 is further configured to obtain indication information of a threshold from the second communication apparatus.

In a possible implementation, that the first mode is determined based on the downlink channel information and the first multipath information includes: The first mode is determined based on the downlink channel information, the first multipath information, and the second multipath information.

In a possible implementation, that the first mode is determined based on the downlink channel information, the first multipath information, and the second multipath information includes: The first mode is determined based on similarities between the first channel and the first reconstructed channel, and between the first channel and the second reconstructed channel.

The first reconstructed channel is determined based on the first multipath information, the second reconstructed channel is determined based on the second multipath information, and the first channel is a channel corresponding to the downlink channel information.

In a possible implementation, that the first mode is determined based on the similarities between the first channel and the first reconstructed channel, and between the first channel and the second reconstructed channel includes: The first mode is determined based on a threshold and the similarities between the first channel and the first reconstructed channel, and between the first channel and the second reconstructed channel.

In a possible implementation, that the first mode is determined based on the similarities between the first channel and the first reconstructed channel, and between the first channel and the second reconstructed channel includes: The first mode is determined based on similarities between the first channel and the first reconstructed channel, between the first channel and the second reconstructed channel, and between the first channel and a third reconstructed channel, where the third reconstructed channel is a reconstructed channel corresponding to the CSI-related information.

In a possible implementation, the reference point corresponding to the first multipath information matches the downlink channel information, or the reference point corresponding to the first multipath information matches the location information of the first communication apparatus.

In a possible implementation, the downlink channel information includes third multipath information, and the third multipath information is determined based on a channel estimation result of the downlink reference signal.

When the communication apparatus 900 is configured to implement a function of the access network device in FIG. 3, specifically, the processing unit 910 is configured to generate a downlink reference signal. The transceiver unit 920 is configured to send the downlink reference signal to a first communication apparatus, where the downlink reference signal is used to determine downlink channel information. The transceiver unit 920 is further configured to send an electromagnetic map to the first communication apparatus, where the electromagnetic map includes first multipath information. The transceiver unit 920 is further configured to receive first information from the first communication apparatus, where the first information is associated with a first mode in which the first communication apparatus feeds back the downlink channel information to the second communication apparatus, and the first mode is determined based on the downlink channel information and the first multipath information.

In a possible implementation, the first information includes second multipath information and/or location information, the second multipath information is obtained by calibrating the downlink channel information based on the first multipath information, and the location information includes location information of the first communication apparatus or location information of a reference point corresponding to the first multipath information.

In a possible implementation, the second multipath information includes an angle of arrival and an angle of departure, and the angle of arrival and the angle of departure are determined based on the downlink channel information.

In a possible implementation, the second multipath information further includes a power and/or a delay, the power is determined based on the first multipath information, and the delay is determined based on the first multipath information or the downlink channel information.

In a possible implementation, the first mode includes feeding back the second multipath information.

In a possible implementation, the first mode includes feeding back the location information.

In a possible implementation, the first information includes channel state information CSI-related information.

In a possible implementation, the first mode includes feeding back the CSI-related information.

In a possible implementation, the transceiver unit 920 is further configured to send indication information of a threshold to the first communication apparatus.

In a possible implementation, that the first mode is determined based on the downlink channel information and the first multipath information includes: The first mode is determined based on the downlink channel information, the first multipath information, and the second multipath information.

In a possible implementation, that the first mode is determined based on the downlink channel information, the first multipath information, and the second multipath information includes: The first mode is determined based on similarities between the first channel and the first reconstructed channel, and between the first channel and the second reconstructed channel.

The first reconstructed channel is determined based on the first multipath information, the second reconstructed channel is determined based on the second multipath information, and the first channel is a channel corresponding to the downlink channel information.

In a possible implementation, that the first mode is determined based on the similarities between the first channel and the first reconstructed channel, and between the first channel and the second reconstructed channel includes: The first mode is determined based on a threshold and the similarities between the first channel and the first reconstructed channel, and between the first channel and the second reconstructed channel.

In a possible implementation, that the first mode is determined based on the similarities between the first channel and the first reconstructed channel, and between the first channel and the second reconstructed channel includes: The first mode is determined based on similarities between the first channel and the first reconstructed channel, between the first channel and the second reconstructed channel, and between the first channel and a third reconstructed channel, where the third reconstructed channel is a reconstructed channel corresponding to the CSI-related information.

In a possible implementation, the reference point corresponding to the first multipath information matches the downlink channel information, or the reference point corresponding to the first multipath information matches the location information of the first communication apparatus.

In a possible implementation, the downlink channel information includes third multipath information, and the third multipath information is determined based on a channel estimation result of the downlink reference signal.

For more detailed descriptions of the processing unit 910 and the transceiver unit 920, refer to the descriptions in FIG. 3 in the foregoing method embodiment. Details are not described herein again.

In a possible implementation, when the access network device uses an O-RAN architecture, the processing unit 910 may be located on an O-CU entity, and the transceiver unit 920 may be located on an O-DU entity or an O-RU entity. Optionally, when the O-CU entity includes an O-CU-CP entity and an O-CU-UP entity, the processing unit 910 may be located on the O-CU-CP entity or the O-CU-UP entity. Alternatively, the processing unit 910 is located on the O-DU entity, and the transceiver unit 920 is located on the O-RU entity. Alternatively, both the processing unit 910 and the transceiver unit 920 are located on the O-DU entity, the O-RU entity, or the like. This is not limited.

It may be understood that, in embodiments of this application, division into the units is an example, and is merely logical function division. In actual implementation, another division manner may be used. In addition, functional units in embodiments of this application may be integrated into one physical device (for example, a processor), or each functional unit may be an independent physical device, or two or more units may be integrated into one unit for implementation. The integrated unit may be implemented in a form of hardware, or implemented in a form of a software functional module, or the like.

As shown in FIG. 10, a communication apparatus 1000 includes a processing circuit 1010 and an interface circuit 1020. The processing circuit 1010 and the interface circuit 1020 are coupled to each other. It may be understood that the processing circuit 1010 may be a processor, and the interface circuit 1020 may be a transceiver or an input/output interface.

Optionally, the communication apparatus 1000 may further include a memory 1030, configured to store instructions executed by the processing circuit 1010, store input data required by the processing circuit 1010 to run the instructions, or store data generated after the processing circuit 1010 runs the instructions.

Optionally, the memory (for example, 1030) in this embodiment of this application may be integrated into the processing circuit (for example, 1010), or the memory (for example, 1030) and the processing circuit (for example, 1010) may be separately arranged.

When the communication apparatus 1000 is configured to implement the method shown in FIG. 3, the processing circuit 1010 is configured to implement a function of the processing unit 910, and the interface circuit 1020 is configured to implement a function of the transceiver unit 920.

When the communication apparatus is a chip used in a terminal, the chip implements functions of the terminal in the foregoing method embodiment. The chip receives, through another module (such as a radio frequency module or an antenna) in the terminal, information sent by an access network device to the terminal; or the chip sends information to another module (such as a radio frequency module or an antenna) in the terminal, where the information is sent by the terminal to an access network device.

When the communication apparatus is a module used in a radio access network device, the module implements functions of the radio access network device in the foregoing method embodiment. The module receives information from another module (for example, a radio frequency module or an antenna) in the access network device, where the information is sent by a terminal to the access network device. Alternatively, the module sends information to another module (for example, a radio frequency module or an antenna) in the access network device, where the information is sent by the access network device to a terminal.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any conventional processor or the like.

In this embodiment of this application, the memory may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk, a CD-ROM, or any other form of storage medium well known in the art.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be located in an ASIC.

An embodiment of this application further provides a communication apparatus. The communication apparatus includes a processor and a memory. The processor is configured to implement a function of the access network device or the terminal in FIG. 3. For example, the processor is configured to execute a computer program or instructions stored in the memory, the memory is configured to store the computer program or the instructions, and when the computer program or the instructions are run, the method of the access network device or the terminal in FIG. 3 is performed. Optionally, the processor is coupled to the memory.

An embodiment of this application further provides a communication apparatus, including a processor. The processor is configured to implement a function of the access network device or the terminal in FIG. 3.

An embodiment of this application further provides a computer-readable storage medium. The computer-readable storage medium stores instructions, and the instructions may also be referred to as a computer program, computer program code, or the like. The instructions are run on a computer, so that the computer performs a function of the access network device or the terminal in FIG. 3 in the foregoing method embodiment.

An embodiment of this application further provides a computer program product, including a computer program or instructions. The computer program product includes a computer program or instructions used to perform the method of the terminal in FIG. 3, or the computer program product includes a computer program or instructions used to perform the method of the access network device in FIG. 3.

An embodiment of this application further provides a chip. The chip includes a processor. The processor is coupled to a memory. The processor is configured to execute a computer program or instructions stored in the memory, so that a function of the access network device or the terminal in FIG. 3 is implemented.

An embodiment of this application further provides a communication system, including a first communication apparatus and a second communication apparatus. The first communication apparatus is configured to implement a function of the terminal in FIG. 3, and the second communication apparatus is configured to implement a function of the access network device in FIG. 3.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

## Claims

1. An information feedback method, wherein the method is applied to a first communication apparatus and comprises:
obtaining a downlink reference signal, wherein the downlink reference signal is used to determine downlink channel information;
obtaining an electromagnetic map, wherein the electromagnetic map comprises first multipath information; and
feeding back first information to a second communication apparatus, wherein the first information is associated with a first mode in which the first communication apparatus feeds back the downlink channel information to the second communication apparatus, and the first mode is determined based on the downlink channel information and the first multipath information.

2. The method according to claim 1, wherein the first information comprises second multipath information and/or location information, the second multipath information is obtained by calibrating the downlink channel information based on the first multipath information, and the location information comprises location information of the first communication apparatus or location information of a reference point corresponding to the first multipath information.

3. The method according to claim 2, wherein the second multipath information comprises an angle of arrival and an angle of departure, and the angle of arrival and the angle of departure are determined based on the downlink channel information.

4. The method according to claim 3, wherein the second multipath information further comprises a power and/or a delay, the power is determined based on the first multipath information, and the delay is determined based on the first multipath information or the downlink channel information.

5. The method according to any one of claims 2 to 4, wherein the first mode comprises feeding back the second multipath information.

6. The method according to any one of claims 2 to 4, wherein the first mode comprises feeding back the location information.

7. The method according to claim 1, wherein the first information comprises channel state information CSI-related information.

8. The method according to claim 7, wherein the first mode comprises feeding back the CSI-related information.

9. The method according to any one of claims 1 to 8, further comprising: obtaining indication information of a threshold from the second communication apparatus.

10. The method according to any one of claims 1 to 9, wherein that the first mode is determined based on the downlink channel information and the first multipath information comprises: the first mode is determined based on the downlink channel information, the first multipath information, and the second multipath information.

11. The method according to claim 10, wherein that the first mode is determined based on the downlink channel information, the first multipath information, and the second multipath information comprises:
the first mode is determined based on similarities between the first channel and the first reconstructed channel, and between the first channel and the second reconstructed channel, wherein
the first reconstructed channel is determined based on the first multipath information, the second reconstructed channel is determined based on the second multipath information, and the first channel is a channel corresponding to the downlink channel information.

12. The method according to claim 11, wherein that the first mode is determined based on the similarities between the first channel and the first reconstructed channel, and between the first channel and the second reconstructed channel comprises: the first mode is determined based on a threshold and the similarities between the first channel and the first reconstructed channel, and between the first channel and the second reconstructed channel.

13. The method according to claim 11, wherein that the first mode is determined based on the similarities between the first channel and the first reconstructed channel, and between the first channel and the second reconstructed channel comprises: the first mode is determined based on similarities between the first channel and the first reconstructed channel, between the first channel and the second reconstructed channel, and between the first channel and a third reconstructed channel, wherein the third reconstructed channel is a reconstructed channel corresponding to the CSI-related information.

14. The method according to any one of claims 1 to 13, wherein the reference point corresponding to the first multipath information matches the downlink channel information, or the reference point corresponding to the first multipath information matches the location information of the first communication apparatus.

15. The method according to any one of claims 1 to 14, wherein the downlink channel information comprises third multipath information, and the third multipath information is determined based on a channel estimation result of the downlink reference signal.

16. An information feedback method, wherein the method is applied to a second communication apparatus and comprises:
sending a downlink reference signal to a first communication apparatus, wherein the downlink reference signal is used to determine downlink channel information;
sending an electromagnetic map to the first communication apparatus, wherein the electromagnetic map comprises first multipath information; and
receiving first information from the first communication apparatus, wherein the first information is associated with a first mode in which the first communication apparatus feeds back the downlink channel information to the second communication apparatus, and the first mode is determined based on the downlink channel information and the first multipath information.

17. The method according to claim 16, wherein the first information comprises second multipath information and/or location information, the second multipath information is obtained by calibrating the downlink channel information based on the first multipath information, and the location information comprises location information of the first communication apparatus or location information of a reference point corresponding to the first multipath information.

18. The method according to claim 17, wherein the second multipath information comprises an angle of arrival and an angle of departure, and the angle of arrival and the angle of departure are determined based on the downlink channel information.

19. The method according to claim 18, wherein the second multipath information further comprises a power and/or a delay, the power is determined based on the first multipath information, and the delay is determined based on the first multipath information or the downlink channel information.

20. The method according to any one of claims 17 to 19, wherein the first mode comprises feeding back the second multipath information.

21. The method according to any one of claims 17 to 19, wherein the first mode comprises feeding back the location information.

22. The method according to claim 16, wherein the first information comprises channel state information CSI-related information.

23. The method according to claim 22, wherein the first mode comprises feeding back the CSI-related information.

24. The method according to any one of claims 16 to 23, further comprising: sending indication information of a threshold to the first communication apparatus.

25. The method according to any one of claims 16 to 24, wherein that the first mode is determined based on the downlink channel information and the first multipath information comprises: the first mode is determined based on the downlink channel information, the first multipath information, and the second multipath information.

26. The method according to claim 25, wherein that the first mode is determined based on the downlink channel information, the first multipath information, and the second multipath information comprises:
the first mode is determined based on similarities between the first channel and the first reconstructed channel, and between the first channel and the second reconstructed channel, wherein
the first reconstructed channel is determined based on the first multipath information, the second reconstructed channel is determined based on the second multipath information, and the first channel is a channel corresponding to the downlink channel information.

27. The method according to claim 26, wherein that the first mode is determined based on the similarities between the first channel and the first reconstructed channel, and between the first channel and the second reconstructed channel comprises: the first mode is determined based on a threshold and the similarities between the first channel and the first reconstructed channel, and between the first channel and the second reconstructed channel.

28. The method according to claim 26, wherein that the first mode is determined based on the similarities between the first channel and the first reconstructed channel, and between the first channel and the second reconstructed channel comprises: the first mode is determined based on similarities between the first channel and the first reconstructed channel, between the first channel and the second reconstructed channel, and between the first channel and a third reconstructed channel, wherein the third reconstructed channel is a reconstructed channel corresponding to the CSI-related information.

29. The method according to any one of claims 16 to 28, wherein the reference point corresponding to the first multipath information matches the downlink channel information, or the reference point corresponding to the first multipath information matches the location information of the first communication apparatus.

30. The method according to any one of claims 16 to 29, wherein the downlink channel information comprises third multipath information, and the third multipath information is determined based on a channel estimation result of the downlink reference signal.

31. A communication apparatus, comprising:
a processor, configured to execute a computer program or instructions stored in a memory, wherein
the memory is configured to store the computer program or the instructions, wherein
when the computer program or the instructions are run, the method according to any one of claims 1 to 15 is performed, or the method according to any one of claims 16 to 30 is performed.

32. A computer-readable storage medium, wherein the computer-readable storage medium stores instructions, and when the instructions are run on a computer, the computer is caused to perform the method according to any one of claims 1 to 15 or the method according to any one of claims 16 to 30.

33. A computer program product, wherein the computer program product comprises a computer program or instructions used to perform the method according to any one of claims 1 to 15, or the computer program product comprises a computer program or instructions used to perform the method according to any one of claims 16 to 30.

34. A communication system, comprising:
a first communication apparatus, wherein the first communication apparatus is configured to perform the method according to any one of claims 1 to 15; and
a second communication apparatus, wherein the second communication apparatus is configured to perform the method according to any one of claims 16 to 30.
